# EUROPEAN PATENT SPECIFICATION

(11) **EP 1 810 991 B1**
(45) Date of publication and mention of the grant of the patent: **23.05.2012**
(21) Application number: 04802406.1
(22) Date of filing: 30.11.2004
(51) Int. Cl.: C08L 23/10, C08F 210/00, C08F 4/6592, C08F 4/654

(54) **METHOD FOR PRODUCING A POLYOLEFIN COMPOSITE MATERIAL**
HERSTELLUNGSVERFAHREN FÜR POLYOLEFINVERBUNDWERKSTOFF
PROCÉDÉ SERVANT À PRODUIRE UNE MATIÈRE COMPOSITE DE POLYOLÉFINES

(30) Priority: 05.11.2004 CN 200410009753
(43) Date of publication of application: 25.07.2007
(73) Proprietor: Institute of Chemistry, Chinese Academy of Science, Beijing 100080 (CN)
(72) Inventor: DONG, Jinyong, Haidian District, Beijing 100080 (CN); LIU, Jiguang, Haidian District, Beijing 100080 (CN); HAN, Zhichao, Haidian District, Beijing 100080 (CN); WANG, Dujin, Haidian District, Beijing 100080 (CN); NIU, Hui, Haidan district, Beijing 100080 (CN)
(74) Representative: Böck, Bernhard
(86) International application number: PCT/CN2004/001383
(87) International publication number: WO 2006/047913

(56) References cited:
- EP-A1- 1 246 849
- EP-B1- 0 586 168
- WO-A-96/11218
- CN-A- 1 250 058
- CN-A- 1 292 389
- US-A- 5 032 562
- US-B1- 6 207 756
- US-B1- 6 492 473
- MAEDER D ET AL: "GLASS TRANSITION TEMPERATURE DEPRESSION OF ELASTOMERS BLENDED WITH POLY(PROPENE)S OF DIFFERENT STEREOREGULARITIES" MACROMOLECULES, ACS, WASHINGTON, DC, US, vol. 32, no. 4, 23 February 1999 (1999-02-23), pages 1252-1259, XP000802475 ISSN: 0024-9297

## Description

### Field of the Invention

The present invention belongs to the field of polyolefin alloy preparation, and particularly relates to a polyolefin composite material in good form with adjustable composition and performances, produced by controlling two catalytic components of a composite catalyst to be catalytic by stage in the olefin polymerization reaction.

### Background of the Invention

By mixing different polymeric materials to form a polymer composite material (also referred to as polymer alloy), the polymeric composite material can have advantages of two or more polymers, and its performance can be improved effectively in many aspects. At present, there are mainly two methods to form polymer alloys. One method is a conventional mechanical blending method, and the other one is an in-situ synthesis method. It is difficult for the mechanical blending method to blend the polymers thoroughly, especially the non-polar polyolefin materials. The in-situ alloy synthesis method synthesizes one or more other polymers on or in the particles of a polymer, to realize the in-situ blending of different polymers. Since a second polymer is in the particles of a first polymer, not only a homogeneous polymer composite material can be obtained, but also polymers insoluble to each other can be mixed homogeneously, which is difficult to implement with the mechanical blending method. Presently, great attention has been paid to studies on the industrialization of polyolefin alloy, typically reactor granule technology (RGT).

Spheripol technique is one of the earliest industrialized RGT. This technique comprises: bulk polymerizing propylene; and then feeding polypropylene particles into the gas phase reactor, and copolymerizing ethylene and propylene in the polypropylene particles in the presence of the catalyst that is still active, so as to obtain a polyolefin material with high impact resistance. Spherilene technique, similar to Spheripol technique, is mainly used in the production of ethylene alloys. Interloy is a process in which polyolefin particles are first produced by using Ziegler-Natta catalyst; and then, in the particles, free radical graft copolymerization is carried out under radiation of a radioactive source, to synthesize a copolymer of polar monomers in the polymer particles. In Hivalloy technique, after polymerization in the presence of Ziegler-Natta catalyst, olefin is graft copolymerized with the matrix in the gaps formed in the polyolefin by using peroxide. It can implement graft polymerization of polar monomers or even non-olefin monomers such as styrene, acrylonitrile, acrylate and so on in polyolefin base, and thereby endows the polyolefin material with superior performances. Catalloy technique has most advantages of RGT, in which, a homopolymer is formed first, and then a second, third, and fourth monomers are introduced for polymerization, so as to obtain a multi-phase alloy of multiple polymers. This technique is a flexible multi-stage gas phase technique, and the performances of its products are comparable to those of nylon, polyethylene terephthalate (PET), acrylonitrile butadiene styrene (ABS), or polyvinylchloride (PVC). US5,698,642 proposes a multi-zone circulating reactor (MZCR) technique, which is much more advanced than Catalloy technique, and realizes ideal mixing of alloys and formation of a solid solution. However, all of above techniques are based on the heterogeneous catalyst (Ziegler-Natta catalyst), and most of them employ gas phase technique in the second polymerization stage. In addition, since Ziegler-Natta catalyst has poor copolymerization capability, and the molecular weight distribution of the polymer obtained through olefinic polymerization is wide, it is difficult to widely use those techniques in the molecular design of polyolefin materials, and it is also difficult for those techniques to improve the performances of alloys.

The metallocene catalyst for olefinic polymerization is a homogeneous catalyst developed in the recent years. It has single catalytic active site and strong copolymerization capability, and can catalyze the copolymerization of most monomers copolymerize, produce a polymer having a narrow molecular weight distribution and uniform distribution of the comonomers, and produce syndiotactic copolymers. Therefore, it can be used in molecular design of polymers. When metallocene catalyst is used to catalyze olefinic polymerization, the performances of the polymer can be predefined as required, and thereby the polymer can be synthesized more effectively and purposively. P. Galli and al. in Montell Lab, Italy discloses a method of using Ziegler-Natta catalyst and metallocene catalyst together for RGT for the first time in "Journal of Applied Polymer Science", P1831, Vol.66, 1996. In this method, after homopolymerization of propylene, Ziegler-Natta catalyst is deactivated with water, r-EBTHZrCl₂ solution activated with alkylaluminoxane is added, and then gas-phase copolymerization of ethylene and propylene is carried out. However, this method is a method physically adsorbing metallocene catalyst, which can only be used in gas-phase process; if it is used in slurry process, the polymer form will be affected severely due to catalyst bleeding, and it is difficult to obtain desirable composite material. In addition, it is difficult for this method to ensure uniform distribution of catalyst or homogeneous mixing of the polymer produced in the second polymerization stage and the polyolefin produced in the first stage, and therefore, it is difficult to obtain a desirable polymeric composite material even in gas-phase process.

### Summary of the Invention

An object of the present invention is to provide a method for preparing a polyolefin composite material, which can ensure homogeneous mixing of the polymer produced in the second polymerization stage and the polyolefin produced in the first stage, and can effectively improve the performances of the polymeric composite material and obtain a desirable polymeric composite material.

The present invention utilizes a catalyst composed of non-homogeneous Ziegler-Natta and metallocene catalysts, and controls the non-homogeneous Ziegler-Natta catalyst to be catalytic and the metallocene catalyst to be non-catalytic in the first stage (olefinic polymerization), to produce spherical polyolefin particles. In the second polymerization stage, the present invention controls he non-homogeneous Ziegler-Natta catalyst to be substantially non-catalytic and activates the catalytic activity of metallocene compound to be catalytic in the ethylene homopolymerization or copolymerization, to take full advantage of molecular design ability of metallocene catalyst and carry out molecular design depending on the desired performances. Since the metallocene compound is dispersed homogeneously in the produced polypropylene as the non-homogeneous Ziegler-Natta catalyst breaks in the first polymerization stage, the second component (polymer) produced in the second polymerization stage will be dispersed in the polypropylene matrix homogeneously, so as to form a homogeneous polyolefin composite material.

The method for preparing polyolefin composite material, wherein said polyolefin composite material is composed of a propylene polymer and an ethylene polymer which is obtained by copolymerizing ethylene with an alpha olefin or a diolefin, wherein: the molar content of alpha olefin or diolefin in the ethylene polymer is 0%~60%, and the ethylene polymer is 3-80% by weight of the polyolefin composite material; the polyolefin composite material is in particle form, and the ethylene polymer has a molecular weight distribution of 1-6 and a glass transition temperature of -80-0 °C; and the ethylene polymer produced in the reaction is dispersed homogeneously in the propylene polymer particles to form the polyolefin composite material, comprises the following steps:
(1) adding propylene into a reactor, and carrying out bulk polymerization directly and or slurry polymerization in an alkane solvent having 5~10 carbon atoms and/or aromatic hydrocarbon solvent, in the presence of a composite catalyst composed of non-homogeneous Ziegler-Natta catalytic component and metallocene compound catalytic component, at a reaction temperature of 0°C~80°C, preferably 40°C~70°C, wherein, the metallocene compound catalytic component is 1%~50% , preferably 10~30% by weight of the composite catalyst. In the first olefinic polymerization stage, the non-homogeneous Ziegler-Natta catalyst is catalytic but the metallocene compound is controlled to be non-catalytic, such that the form of the polymer is controlled by the Ziegler-Natta catalyst in the olefinic polymerization to obtain a first polymer in good form and produce polyolefin particles.
   In this step, alkyl aluminium or alkylaluminoxane can be further added as a cocatalyst in such an amount than the molar ratio of Al element to the Ti element in the non-homogeneous Ziegler-Natta catalytic component (Al/Ti) is 0~1000, and preferably 50~200.
   In this step, an external electron donor can be added into the reaction system to control the isotacticity of the polymer, in an amount as 0~100 times of the molar content of Ti element in the catalyst. The external electron donor can be 2,2,6,6-tetramethylpiperidine or an alkoxysilane (e.g., diphenyldimethoxysilane, phenyltriethoxysilane) or aromatic ester (e.g., ethyl benzoate or methyl p-methylbenzoate).
   The metallocene catalyst is controlled to be non-catalytic in the reaction by adding a compound represented by the following formula: 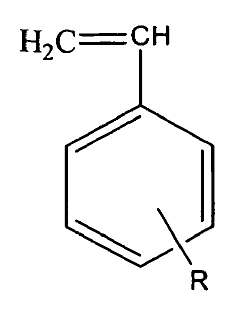 Wherein, R is alkyl having 1~6 carbon atoms, ethenyl, Br, Cl or H
   or an inhibitor (e.g., alkyl aluminum compound having 3-9 carbon atoms) to inhibit the catalytic activity of the metallocene catalyst into the solvent. The amount of addition is 0.1%~20%, preferably 0.5%~2% by volume of the solvent.
(2) after the polymerization in step (1) is completed, stopping the addition of the propylene monomer and introducing olefin monomer required for the second polymerization stage. The non-homogeneous Ziegler-Natta catalyst is controlled to be substantially non-catalytic, but the metallocene compound in dormant state is reactivated to be catalytic in the ethylene homopolymerization or copolymerization, so as to generate new polymer in the polymer particles produced in step (1), to obtain a polyolefin composite material in good form with controllable composition and performances.

After the first polymerization stage, in the second polymerization stage, a slurry polymerization reaction is carried out by adding a reacting monomer to the propylene polymer produced in step (1);
or, the liquid part in the propylene polymer produced in step (1) is removed, an alkane solvent having 5-10 carbon atoms and/or aromatic hydrocarbon solvent is added, and then a reacting monomer is added for slurry polymerization;
or, the liquid part in the propylene polymer produced in step (1) is removed, and then a reacting monomer is added for gas-phase polymerization directly.

The reacting monomer can be an olefin or diolefin having 2~10 carbon atoms.

The reaction temperature of above three methods is each 80°C~120°C, and preferably 90°C~100°C.

The metallocene catalyst in dormant state is reactivated by changing the reacting monomer and/or adding an activator in an amount of 1% by weight or more based on the total amount of the catalyst.

The activator is CₙHₙ₊₂; where, n=0-2.

In the step (2), alkyl aluminum or alkylaluminoxane can be further added as a cocatalyst in such an amount that the molar ratio of the aluminum element to the metallic element of the metallocene compound in the composite catalyst is 0-16,000.

In above two steps, the reaction pressure is 1-100 atm, and the alkyl aluminium or alkylaluminoxane has 1~12 carbon atoms.

The composite catalyst composed of non-homogeneous Ziegler-Natta catalytic component and metallocene compound catalytic component is spherical and porous. It comprises two parts, i.e., the metallocene compound activated by alkyl aluminum or alkylaluminoxane, and the non-homogeneous Ziegler-Natta catalyst system; wherein, the alkyl aluminum or alkylaluminoxane has 1~12 carbon atoms. The activated metallocene compound catalytic component is 1%~50%, preferably 20%~40% by weight of the composite catalyst.

Said non-homogeneous Ziegler-Natta catalyst system is a catalyst in spherical form, containing TiCl₄ or TiCl₃ and internal electron donor, with magnesium chloride as the carrier.

The percentage contents of the components in the non-homogeneous Ziegler-Natta catalyst system are: Mg: 10%~30%, and preferably 15%-22%; Ti: 2%~6%, and preferably 3%-4%; Cl: 50%~70%, and preferably 55%-65%; internal electron donor: 3%~25%, and preferably 10%-20%

In the present invention, the internal electron donor in the non-homogeneous Ziegler-Natta catalyst system is one or more of diisobutyl phthalate, dibutyl phthalate, diethyl succinate, fluorene diether, and a compound represented by the following general formula: 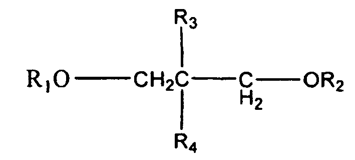 Wherein, R₁ and R₂ are methyl or ethyl; and R₃ and R₄ are alkyl or aryl having 1~8 carbon atoms
or 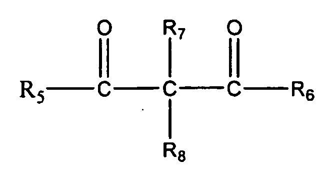 Wherein, R₅, R₆, R₇ and R₈ are alkyl or aryl having 1~8 carbon atoms

X In the activated metallocene compound, the molar ratio of the metallic element in said metallocene compound to the Al element in alkyl aluminum or alkylaluminoxane is 1:50~1:2000. The alkyl aluminum or alkylaluminoxane has 1~12 carbon atoms.

Said metallocene compound is a compound represented by the following general formula: 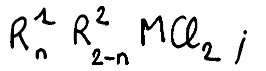 where, R¹ and R² independently are Me₂Si(Ind)₂, Me₂Si(2-Me-4-Ph-Ind)₂, Me₂Si(2-Me-Ind)₂, Me(Me₃Si)Si(2-Me-4-Ph-Ind)₂, Me₂Si(IndR₂)₂, Et(Ind)₂, Me₂SiCp, MeCp, Cplnd, Cp, Ph₂C(Cp)(Flu), Ph₂C(Cp)(2-Me₂NFlu) or Ph₂C(Cp)(2-MeOFlu); "R" in molecular formula Me₂Si(IndR₂)₂ is an alkyl having 1~3 carbon atoms;

Where, Me is CH₃, Ind is indenyl, Ph is benzene ring, Et is ethyl, Cp is cyclopentadiene, and Flu is fluorene. M is Zr, Ti, Hf, V, Cr, Fe or La; and n=0~2.

The composite catalyst for olefinic polymerization or copolymerization in the present invention is prepared as follows:

A mixed solution of alkyl aluminum or alkylaluminoxane and metallocene compound is mixed with the spherical Ziegler-Natta catalytic component; wherein, the alkyl aluminum or alkylaluminoxane has 1~12 carbon atoms. Per 1g Ziegler-Natta catalytic component is mixed with 1 × 10⁻⁶mol~5.6 × 10⁻⁴ mol, and preferably 2× 10⁻⁵mol~1.0× 10⁻⁴mol of activated metallocene compound at a temperature of 0°C~80°C. Then the resulting mixture is agitated, filtered, washed with an alkane solvent having 5~10 carbon atoms or aromatic hydrocarbon solvent, and then dried to obtain the composite catalyst. The preparation process is carried out in inert gas.

Said inert gas includes nitrogen gas, argon gas, or helium gas.

The metallocene compound in the present invention is activated as follows:

An alkyl aluminum or alkylaluminoxane having 1-12 carbon atoms is dissolved in a solvent, and then mixed with metallocene compound at a temperature of 0°C~90°C, and preferably 0°C~50°C, under stirring. The molar ratio of the metallic element in said metallocene to the Al element in said alkyl aluminum or alkylaluminoxane is 1:50~1:2000, and preferably 1:80~1:300. Said solvent is an alkane solvent having 5~10 carbon atoms or aromatic hydrocarbon solvent. The preparation process is carried out in inert gas.

The spherical Zigler-Natta catalyst is prepared with the method disclosed in patent document such as CN1110281A, CN1047302A, CN1091748A or US4399054, or prepared with the following method:

Spherical alcohol-MgCl₂ carrier prepared with alcohol having 2~4 carbon atoms and MgCl₂ at a molar ratio of 1:1~4:1 is put into a preparation flask, add TiCl₄ or TiCl₃ in an amount of 5ml~50ml, and preferably 10ml~50ml relative to per gram carrier, at a temperature of -20°C~10°C, and preferably -20°C~0°C. The resulting mixture is agitated, and heated up gradually. When the temperature is above 80°C, an internal electron donor is added thereto and then heated up to above 110°C. The resulting mixture is agitated and filtered, and 5ml~50ml TiCl₄ or TiCl₃ is added thereto. The resulting mixture is agitated at 100°C~150°C and filtered, without washing or followed by washing thoroughly with alkane (such as pentane, hexane, or heptane).

The present invention utilizes a composite catalyst composed of non-homogeneous Ziegler-Natta catalytic component and metallocene compound catalytic component, and controls the non-homogeneous Ziegler-Natta catalyst to be catalytic and the metallocene compound to be non-catalytic in the first olefinic polymerization stage, to produce spherical polyolefin particles. In the second polymerization stage, the non-homogeneous Ziegler-Natta catalyst is controlled to be non-catalytic, while metallocene compound is activated to be catalytic in the ethylene homopolymerization or copolymerization reaction, to take full advantage of the characteristics of said non-homogeneous metallocene catalyst to obtain a polymer in good form and take full advantage of molecular design ability of metallocene catalyst to carry out molecular design depending on the desired performances. In addition, a second or a third olefin homopolymer or copolymer is produced in the polypropylene particles produced in the first polymerization stage, so as to adjust the performances of the polymer alloy purposively. In the second polymerization stage, the second polymer component produced will be dispersed homogeneously in the polypropylene matrix, and therefore a polyolefin composite material with homogeneous composition can be formed. In examples of the present invention, a series of polyolefin alloy particles in good form and adjustable composition, with the components blended homogeneously, can be obtained.

### Brief Description of the Drawings

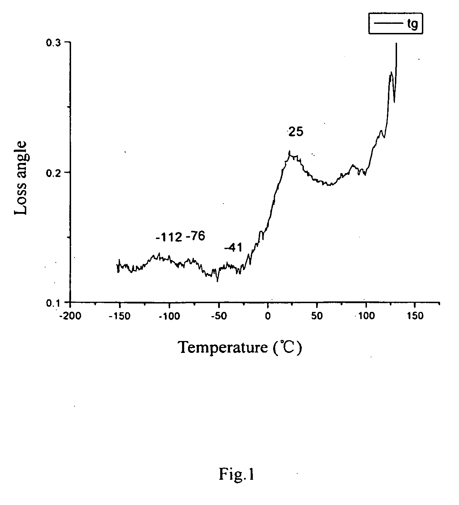

Fig.1 is a DMA diagram of the polymer obtained in Example 15 of the present invention.

### Detailed Description of the Preferred Embodiments

### Example 1

4g spherical alcohol-MgCl₂ carrier (molar ratio of ethanol: MgCl₂ = 1:1) was added into a preparation flask, and then the flask was vacuumized and charged with argon gas. Then 200ml TiCl₄ was added thereto at -20°C, followed by agitating, and heating up to 80°C. Next, 2ml fluorene diether was added thereto, and agitated for 1.5h. After vacuum filtration, 200ml TiCl₄ was added and the resulting mixture was dried, to obtain the non-homogeneous Ziegler-Natta catalytic component.

0.028mmol solid Me₂Si[2-Me-4-Naph-Ind]₂ZrCl₂ compound was put in a two-necked flask charged with argon gas, and 22.4ml 2.5M toluene solution of methylaluminoxane (MAO) was added. Then, the resulting mixture was agitated, heated up to 90°C, and kept at 90°C for 0.5h.

The above agitated metallocene compound was mixed with 2.8g non-homogeneous Ziegler-Natta catalytic component in nitrogen gas at 0°C. the resulting mixture was agitated for 24h, filtered, washed with methylbenzene and hexane respectively for 6-8 times (50ml one time), and then dried in vacuum to obtain the composite catalyst A. The composition of said composite catalyst A was shown in Table 1.

### Example 2

2g spherical alcohol-MgCl₂ carrier (molar ratio of ethanol: MgCl₂ = 4:1) was added into the preparation flask, and then the flask was vacuumized and charged with argon gas. Then, 100ml TiCl₄ was added thereto at 0°C, followed by agitating, and heating up to 80°C. Next, 20ml fluorene diether was added thereto, and agitated for 1.5h. After filtration, 100ml TiCl₄ was added, and the resulting mixture was heated up to 130°C, kept for 2h, filtered and dried in vacuum, to obtain the non-homogeneous Ziegler-Natta catalytic component.

0.28mmol solid Et(ind)₂ZrCl₂ compound was added in a two-necked flask charged with argon gas, and 112ml 0.5M toluene solution of trimethyl aluminum (TMA) was added. Then, the resulting mixture was agitated for 24h at 0°C.

The above metallocene compound solution was mixed with 0.5g non-homogeneous Ziegler-Natta catalytic component in argon gas. The resulting mixture was agitated at 40°C for 6h, filtered, washed with methylbenzene for 6 times (30ml per time), washed with 30ml pentane, and dried in vacuum to obtain the composite catalyst B. The composition of said composite catalyst B was shown in Table 1.

### Example 3

4g spherical alcohol-MgCl₂ carrier (molar ratio of ethanol: MgCl₂ = 2.6:1) was added into the preparation flask, and then the flask was vacuumized and charged with argon gas. Then, 160ml TiCl₄ and 3.0ml dibutyl phthalate were added at -10°C. The resulting mixture was agitated, heated up to 110°C, kept for 1.5h, and washed with hexane for 4 times, to obtain the product in which the Ti content is 3.38%.

4mmol solid Cp₂TiCl₂ compound was put in a two-necked flask charged with argon gas and 143ml 1.4M heptane solution of triisobutylaluminum (TIBA) was added thereto. The resulting mixture was agitated, heated up to 40°C, and kept for 5h.

The above metallocene compound solution was mixed with 2g non-homogeneous Ziegler-Natta catalytic component in nitrogen gas. The resulting mixture was kept at 80°C, agitated for 1h, filtered in vacuum, washed with hexane for 6 times (30ml for one time), and dried in vacuum, to obtain the composite catalyst C. The composition of said composite catalyst C was shown in Table 1.

### Example 4

The catalyst was prepared according to the method disclosed in CN1110281A.

24g anhydrous MgCl₂, 400ml white oil, and 50ml ethanol were added in an autoclave, agitated, heated up to 120°C, and kept for 2h at 120°C. Nitrogen gas was introduced into the autoclave till the pressure in the autoclave reached to 0.8MPa. The drain valve was opened to spray the substances in the autoclave to 3L mineral oil (200#) at stirring through a metal tube (length: 3m, diameter: 1.2mm). The solid precipitate was filtered, washed with hexane for 6 times, and dried at room temperature, to obtain the spherical alcohol-MgCl₂.

8g above alcohol-MgCl₂ was added into 160ml TiCl₄ at -10°C, agitated for 2.5h, and heated up to 110°C. 1.4M dibutyl phthalate was added thereto, kept at 110°C for 2h, and filtered. 160ml TiCl₄ was added thereto, and the resulting mixture was kept at 110°C for 1.5h, washed with hexane for 4 times, and dried in vacuum, to obtain the solid Ziegler-Natta catalytic component, in which the weight percentages were: Ti: 2.9, Mg: 19.1, Cl: 55, dibutyl phthalate: 7.1.

0.35mmol solid Et(ind)₂ZrCl₂ compound was put in a two-necked flask charged with argon gas, and 280ml 0.1M toluene solution of methylaluminoxane (MAO) was added thereto. Then, the resulting mixture was agitated, heated up to 40°C, and kept for 10h.

The above metallocene compound solution was mixed with 2g CS-2 non-homogeneous Ziegler-Natta catalytic component (manufactured by Liaoning Xiangyang Chemicals Group) in nitrogen gas. Then, the resulting mixture was kept at 40°C, agitated for 5h, filtered, washed with decane for 8 times (30ml for one time), washed with 30ml pentane for one time, and dried, to obtain the composite catalyst D. The composition of said composite catalyst D was shown in Table 1.

### Example 5

10g spherical alcohol-MgCl₂ carrier (molar ratio of isopropanol: MgCl₂ = 3.2:1) was added into the preparation flask, and then the flask was vacuumized and charged with argon gas. Then, 100ml TiCl₄ and 5ml ethyl succinate were added thereto at -20°C. The resulting mixture was agitated, heated up to 80°C, kept for 0.5h, filtered, washed with heptane for 8 times (30ml for one time) and washed with 30ml hexane for one time, to obtain the product.

0.28mmol solid rac-Et(Ind)₂HfCl₂ compound was put in a two-necked flask charged with argon gas, and 22.4ml 2.5M toluene solution of methylaluminoxane (MAO) was added thereto. The resulting mixture was agitated mechanically, heated up to 40°C, and kept for 5h.

The above non-homogeneous metallocene compound solution was mixed with 2g non-homogeneous Ziegler-Natta catalytic component in nitrogen gas. The resulting mixture was kept at 60°C, agitated mechanically for 4h, filtered in vacuum, washed with methylbenzene for 6 times, and dried in vacuum, to obtain the composite catalyst E. The composition of said composite catalyst E was shown in Table 1.

### Example 6

0.60mmol solid Cp₂ZrCl₂ compound was put in a two-necked flask charged with argon gas, and 40ml 1.4M dimethylbenzene solution of MAO was added, and agitated for 48h at 0°C.

The above metallocene compound solution was mixed with 2g CS-3 non-homogeneous Ziegler-Natta catalytic component (manufactured by Liaoning Xiangyang Chemicals Group) in nitrogen gas. The resulting mixture was kept at 80°C, agitated mechanically for 0.5h, filtered in vacuum, washed with dimethylbenzene for 6 times (30ml for one time), washed with 30ml pentane for one time, and dried in vacuum, to obtain the composite catalyst F. The composition of said composite catalyst F was shown in Table 1.

**Table 1.**

| Catalyst | Percentage of metallocene compound component in the composite catalyst (%) | Al/M | Percentages of the components in the non-homogeneous Zieglar-Natta catalytic component | | | |
|---|---|---|---|---|---|---|
| | | | Ti% | Mg% | Cl% | Internal electron donor(%) |
| A (Example 1) | 26 | 2000 | 2.0 | 20 | 69 | 3 |
| B (Example 2) | 15 | 200 | 5.96 | 10 | 50 | 25 |
| C (Example 3) | 32 | 50 | 3.38 | 20 | 65 | 8 |
| D (Example 4) | 1 | 80 | 2.48 | 23 | 54 | 6 |
| E (Example 5) | 50 | 200 | 2.0 | 15 | 60 | 10 |
| F (Example 6) | 30 | 93 | 4.6 | 25 | 55 | 12 |

The remainder in the non-homogeneous Ziegler-Natta catalytic component is impurities.

### Preparation of polyolefin composite material:

### Example 7

0.1g catalyst A was added into a 500ml autoclave, 2ml styrene was added, and propylene was introduced therein under 100atm at 0°C, to bulk polymerize for 20min. The addition of propylene was stopped, and ethylene was added under 5atm and was reacted for 10min at 80°C.

### Example 8

0.1 g catalyst B was added into a 250ml three-necked flask, 4ml 1.8M heptane solution of trimethyl aluminum (TMA) and 100ml toluene were added, and propylene was introduced therein under 1 atm at 40°C, to react for 1h. Then, the solvent and propylene was removed in vacuum, 100ml pentane and 9.2ml 1.8M heptane solution of triethyl aluminum were added, and ethylene was introduced therein under 6atm, to react for 10min at 120°C.

### Example 9

0.1g catalyst C was added into a 250ml three-necked flask, 100ml heptane, 2ml divinylbenzene,
and 26.7ml 1.8M heptane solution of triethyl aluminum (TEA) were added, and propylene was introduced therein under 1atm at 80°C, to react for 20min. The addition of propylene was stopped, the product was filtered, and the solvent was removed. Ethylene was introduced under 1atm and was reacted for 10min at 90°C.

### Example 10

0.1g catalyst D was added into a 250ml three-necked flask, 8ml 0.88M heptane solution of diphenyldimethoxysilane, 100ml heptane, 0.1ml para-methyl styrene, and 4ml 1.8M heptane solution of TEA were added, and propylene was introduced under 1atm at 60°C, to react for 1h. Then, the solvent and propylene were removed in vacuum, 100ml decane was added, and ethylene was introduced under 1atm at 120°C, to react for 20min.

### Example 11

0.1g catalyst E was added into a 250ml three-necked flask, 8ml ethyl benzoate (1/50 heptane), 2ml styrene, 100ml decane, and 4ml 1.8M heptane solution of TEA were added, and propylene was introduced under 1atm at 80°C and reacted for 1h. The addition of propylene was stopped, 6ml ethylene (gas) was introduced, and ethylene and propylene (6/1 molar ratio) were introduced under 5atm at 100°C, to react for 10min.

### Example 12

0.1 g catalyst F was added into a 250ml three-necked flask, 20ml styrene, 100ml toluene, 4ml 1.4M toluene solution of MAO were added, and propylene was introduced under 1atm at 50°C, to react for 1h. Then, the solvent and propylene were removed in vacuum, 100ml pentane solvent and 4ml 1.8M heptane solution of triisobutylaluminum (TIBA) were added, and a gas mixture of ethylene and propylene (6/1 molar ratio) were introduced, to react for 30min. at 95°C.

### Example 13

0.1g catalyst A was added into a 250ml three-necked flask, 2ml styrene, 100ml heptane, and 4ml 1.8M heptane solution of TEA were added, and propylene was introduced under 1atm at 40°C, to react for 1h. The addition of propylene was stopped, 10 ml butylenes was added, and ethylene was introduced to carry out a gas phase reaction for 10min at 90°C.

### Example 14

0.1g catalyst F was added into a 250ml three-necked flask, 2ml trimethyl aluminum, 100ml heptane, and 4ml 1.4M heptane solution of TEA were added, and propylene was introduced under 1atm at 40°C, to react for 1h. Then, the solvent and propylene were removed in vacuum, 100ml toluene and 7.1ml 1.4M toluene solution of MAO were added, and ethylene was introduced under 6atm, to react for 30min at 90°C.

### Example 15

0.1g catalyst F was added into a 500ml autoclave, 4ml styrene, 200ml heptane, and 4ml 1.4M heptane solution of TEA were added, and propylene was introduced under 6atm at 60°C, to react for 30min. Then, 20ml octylene was added, and ethylene was introduced under 6atm, heated up to 90°C and reacted for 1min.

### Example 16

0.05g catalyst F was added into a 500ml autoclave, 3ml styrene, 150ml heptane, and 2ml 1.4M heptane solution of TEA were added, and propylene was introduced under 6atm at 60°C, to react for 30min. Then, 6ml decene was added, and ethylene was introduced under 6atm, heated up to 90°C, and reacted for 10min.

### Example 17

0.1 g catalyst F was added into a 500ml autoclave, 4ml styrene, 150ml heptane, and 2ml 1.4M heptane solution of TEA were added, and propylene was introduced under 6atm at 60°C, to react for 30min. Then, ethylene and propylene (1:1.2) were introduced under 6atm, heated up to 90°C, and reacted for 30min.

### Example 18

0.1g catalyst F was added into a 500ml autoclave, 3ml styrene, 150ml heptane, and 2ml 1.4M heptane solution of TEA were added, and propylene was introduced under 6atm at 60°C, to react for 30min. Then, 6ml butadiene was added, and ethylene was introduced under 6atm, heated up to 95°C, and reacted for 10min.

**Table of polymer performances**

| Example | Solvent | Cocatalyst | Monomer | Reaction conditions | Activity (g/g h) | Content of copolymer (%) | Content of monomer (%) | Melting point 1 (°C) | Melting point 2 (°C) |
|---|---|---|---|---|---|---|---|---|---|
| Example 7 | --- | -- | Propylene, styrene; *Ethylene* | 0°C, 100atm 80°C, 5atm | 20000 | 20 | 0 | 131 | 158 |
| Example 8 | Heptane and pentane | TMA TEA | Propylene; *Ethylene* | 40°C, 1atm; 120°C,6atm | 280 | 40 | 0 | 131 | 156 |
| Example 9 | Heptane | TEA | Propylene, divinylbenzene; *Ethylene* | 80°C, 1atm; 90°C, 1 atm | 560 | 50 | 0 | 130 | 156 |
| Example 10 | Heptane, Decane | TEA | Propylene, p-methyl *styrene; ethylene* | 60°C, 1 atm; 120°C, 1atm | 180 | 40 | 0 | 130 | 158 |
| Example 11 | Heptane | TEA | Propylene, styrene; *Ethylene, propylene* | 80°C, 1 atm; 100°C, 5atm | 260 | 60 | 8 | 121 | 156 |
| Example 12 | Toluene, Heptane | MAO; TIBA | Propylene, phenethylene; *Ethylene, propylene* | 50°C, 1 atm; 95°C, 1atm | 160 | 40 | 6 | 118 | 158 |
| Example 13 | Decane | TEA | Propylene, styrene; *Ethylene, butylene* | 40°C, 1 atm; 120°C, 1 atm | 180 | 10 | 10 | 118 | 156 |
| Example 14 | Heptane; Toluene | TEA, MAO | Propylene, trimethyl aluminum; *Ethylene* | 40°C, 1 atm; 90°C, 6atm | 460 | 80 | 0 | 130 | 158 |
| Example 15 | Heptane | TEA | Propylene, styrene; *Ethylene, octylene* | 60°C, 6atm; 90°C, 6atm | 600 | 3 | 60 | --- | 152 |
| Example 16 | Heptane | TEA | Propylene, styrene; *Ethylene, Decene* | 60°C, 6atm; 90°C, 6atm | 580 | 30 | 16 | 122 | 156 |
| Example 17 | Heptane | TEA | Propylene, styrene; *Ethylene, propylene* | 60°C, 6atm; 90°C, 6atm | 620 | 70 | 40 | --- | 155 |
| Example 18 | Decane | TEA | Propylene, styrene; *Ethylene, butadiene* | 60°C, 6atm; 95°C, 6atm | 590 | 30 | 8 | 128 | 152 |

| | | | | | | | | | |
|---|---|---|---|---|---|---|---|---|---|
| Note: The monomer content is the percentage of other olefin monomers copolymerized with ethylene in the copolymer, except for ethylene. The PE and PP content in the polymer is calculated as the consumed amount in the reaction. The italic items indicate the monomers in the second reaction stage. | | | | | | | | | |

## Claims

1. A method for preparing a polyolefin composite material, wherein said polyolefin composite material is composed of a propylene polymer and an ethylene polymer which is obtained by copolymerizing ethylene with an alpha olefin or a diolefin, wherein:
the molar content of alpha olefin or diolefin in the ethylene polymer is 0%~60%, and the ethylene polymer is 3-80% by weight of the polyolefin composite material;
the polyolefin composite material is in particle form, and the ethylene polymer has a molecular weight distribution of 1-6 and a glass transition temperature of -80-0 °C; and
the ethylene polymer produced in the reaction is dispersed homogeneously in the propylene polymer particles to form the polyolefin composite material,
**characterized in that** the method comprises the following steps:
(1) adding propylene into a reactor, and carrying out bulk polymerization directly and/or slurry polymerization in an alkane and/or aromatic hydrocarbon solvent, in the presence of a composite catalyst composed of non-homogeneous Ziegler-Natta catalytic component and metallocene compound catalytic component, at a reaction temperature of 0°C~80°C, wherein the metallocene compound catalytic component is 1%~50% by weight of the composite catalyst, and in the first olefinic polymerization stage, the non-homogeneous Ziegler-Natta catalyst is catalytic and the metallocene compound is controlled to be non-catalytic, to obtain polyolefin particles; and
(2) after the polymerization in step (1) is completed, stopping the addition of the propylene monomer for polymerization in step (1), and
either introducing a reacting monomer directly into the propylene polymer produced in step (1) for slurry polymerization;
or removing the liquid part from the propylene polymer produced in step (1), adding alkane and/or aromatic hydrocarbon solvent, and introducing reacting monomer for slurry polymerization;
or removing the liquid part from the propylene polymer produced in step (1), and introducing a reacting monomer directly for gas-phase polymerization;
wherein said reacting monomer is an olefin or diolefin having 2-10 carbon atoms; and
the non-homogeneous Ziegler-Natta catalyst is controlled to be substantially non-catalytic, and the metallocene compound in dormant state is reactivated to be catalytic in the ethylene homopolymerization or copolymerization, to obtain the polyolefin composite material.

2. The method according to claim 1 **characterized in that**, said alkane solvent is an alkane having 5-10 carbon atoms.

3. The method according to claim 1 **characterized in that**, in step (1), an alkyl aluminum or alkylaluminoxane is further added as a cocatalyst, in such an amount that the molar ratio of the Al element to the Ti element in said non-homogeneous Ziegler-Natta catalytic component is: Al/Ti = 0-1,000.

4. The method according to claim 1 **characterized in that**, in step (1), an alkoxy silane, 2,2,6,6-tetramethylpiperidine or aromatic ester as an external electron donor is further added into the reaction system to control the degree of isotacticity of the polymer, in an amount as 0-100 times of the mol content of Ti element in the catalyst.

5. The method according to claim 4 **characterized in that**, said alkoxy silane is diphenyldimethoxysilane or phenyltriethoxysilane; and said aromatic ester is ethyl benzoate or methyl p-methylbenzoate.

6. The method according to claim 1 **characterized in that**, in the step (1), said metallocene catalyst is controlled to be non-catalytic by adding a compound represented by the following formula: 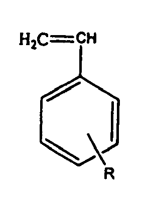 Where, R is an alkyl having 1~6 carbon atoms, ethenyl, Br, Cl or H or an alkyl aluminum compound having 3-9 carbon atoms to inhibit the catalytic activity of the metallocene catalyst into the solvent, in an amount of 0.1%~20% by volume of the solvent.

7. The method according to claim 1 **characterized in that**, the reaction temperature in step (2) is 80°C~120°C.

8. The method according to claim 1 **characterized in that**, in step (2), the metallocene catalyst in dormant state is reactivated by changing the reacting monomer, wherein the reacting monomer is an olefin or diolefin having 2-10 carbon atoms.

9. The method according to claim 1 **characterized in that**, in step (2), an alkyl aluminum or alkylaluminoxane is further added as a cocatalyst, in such an amount that the molar ratio of the Al element to the metallic element in the metallocene compound in said composite catalyst is 0-16,000.

10. The method according to claim 9 **characterized in that**, said alkyl aluminum or alkylaluminoxane each has 1-12 carbon atoms.

11. The method according to claim 1 **characterized in that**, said composite catalyst is composed of the metallocene compound activated by alkyl aluminum or alkylaluminoxane and the non-homogeneous Ziegler-Natta catalyst system, wherein the catalytic component in the activated metallocene compound is 1%~50% by weight of the composite catalyst, and the alkyl aluminum or alkylaluminoxane has 1-12 carbon atoms.

12. The method according to claim 11 **characterized in that**, said non-homogeneous Ziegler-Natta catalyst system is a spherical form catalyst containing magnesium chloride as a carrier, TiCl₄ or TiCl₃, and an internal electron donor;
wherein the internal electron donor is diisobutyl phthalate, dibutyl phthalate, diethyl succinate, or fluorene diether, or any compound represented by the following formula: 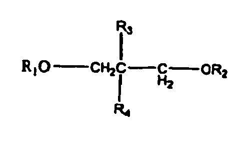 Where, R₁ and R₂ are methyl or ethyl; and R₃ and R4 are an alkyl or aryl group having 1-8 carbon atoms
or 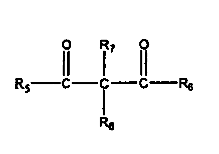 Where, R₅, R₆, R₇ and R₈ are an alkyl or aryl group having 1-8 carbon atoms.

13. The method according to claim 11 or 12 **characterized in that**, the percentages of the components in said non-homogeneous Ziegler-Natta catalyst system are: Mg: 10%~30%, Ti: 2%~6%, Cl: 50%~70%, and internal electron donor: 3%~25%.

14. The method according to claim 11 **characterized in that**, in said activated metallocene compound, the molar ratio of the metallic element in said metallocene compound to the Al element in alkyl aluminum or alkylaluminoxane is 1: 50-1:2,000.

15. The method according to claim 11 or 14 **characterized in that**, said metallocene compound is a compound having the following general formula:
Rₙ¹ R₂₋ₙ² MCl₂
in which, R' and R² independently are Me₂Si(Ind)₂, Me₂Si(2-Me-4-Ph-Ind)₂, Me₂Si(2-Me-Ind)₂, Me(Me₃Si)Si(2-Me-4-Ph-ind)₂, Me₂Si(IndR₂)₂, Et(Ind)₂, Me₂SiCp, MeCp, CpInd, Cp, Ph₂C(Cp)(Flu), Ph₂C(Cp)(2-Me₂NFlu) or Ph₂C(Cp)(2-Me0Flu), wherein "R" in molecular formula Me₂Si(IndR₂)₂ is an alkyl having 1-3 carbon atoms, Me is CH₃, Ind is indenyl, Ph is benzene ring, Et is ethyl, Cp is cyclopentadiene, and Flu is fluorene;
M is Zr, Ti, Hf, V, Cr, Fe or La; and
n=0-2.

## Patentansprüche

1. Verfahren zur Herstellung eines Polyolefinverbundmaterials, wobei dass Polyolefinverbundmaterial aus einem Propylenpolymer und einem Ethylenpolymer besteht, das durch Copolymerisieren von Ethylen mit einem Alpha-Olefin oder einem Diolefin erhalten wird, wobei:
der Molgehalt von Alpha-Olefin oder Diolefin in dem Ethylenpolymer 0 %~60 % beträgt und das Ethylenpolymer 3-80 Gew.-% des Polyolefinverbundmaterials beträgt;
das Polyolefinverbundmaterial in Teilchenform vorliegt und das Ethylenpolymer eine Molekulargewichtsverteilung von 1-6 und eine Glasübergangstemperatur von 80-0 °C aufweist; und
das bei der Reaktion hergestellte Ethylenpolymer homogen in den Propylenpolymerteilchen dispergiert wird, um das Polyolefinverbundmaterial zu bilden,
**dadurch gekennzeichnet, dass** das Verfahren folgende Schritte umfasst:
(1) Eingeben von Propylen in einen Reaktor und direktes Durchführen einer Massenpolymerisation und/oder Aufschlämmungspolymerisation in einem Alkan- und/oder aromatischen Kohlenwasserstofflösungsmittel in Gegenwart eines Verbundstoffkatalysators, der aus einer nichthomogenen katalytischen Ziegler-Natta-Komponente und einer katalytischen Metallocenverbindungskomponente besteht, bei einer Reaktionstemperatur von 0 °C~80 °C, wobei die katalytische Metallocenverbindungskomponente 1 %~50 Gew.-% des Verbundstoffkatalysators beträgt und der nichthomogene Ziegler-Natta-Katalysator in der ersten olefinischen Polymerisationsstufe katalytisch ist und die Metallocenverbindung so reguliert wird, dass sie nichtkatalytisch ist, um Polyolefinteilchen zu erhalten; und
(2) nachdem die Polymerisation in Schritt (1) abgeschlossen ist, Beenden des Zugebens des Propylenmonomers zur Polymerisation in Schritt (1) und entweder Einführen eines reagierenden Monomers direkt in das in Schritt (1) hergestellte Propylenpolymer zur Aufschlämmungspolymerisation;
oder Entfernen des flüssigen Teils von dem in Schritt (1) hergestellten Propylenpolymer, Hinzugeben von Alkan- und/oder aromatischem Kohlenwasserstofflösungsmittel und Einführen von reagierendem Monomer zur Aufschlämmungspolymerisation;
oder Entfernen des flüssigen Teils von dem in Schritt (1) hergestellten Propylenpolymer und direktes Einführen eines reagierenden Monomers zur Gasphasenpolymerisation;
wobei das reagierende Monomer ein Olefin oder Diolefin ist, das 2-10 Kohlenstoffatome aufweist; und
der nichthomogene Ziegler-Natta-Katalysator so reguliert wird, dass er im Wesentlichen nichtkatalytisch ist und die Metallocenverbindung im ruhenden Zustand reaktiviert wird, um bei der Ethylenhomopolymerisierung oder -copolymerisierung katalytisch zu sein, um das Polyolefinverbundmaterial zu erhalten.

2. Verfahren nach Anspruch 1, **dadurch gekennzeichnet, dass** das Alkanlösungsmittel ein Alkan ist, das 5-10 Kohlenstoffatome aufweist.

3. Verfahren nach Anspruch 1, **dadurch gekennzeichnet, dass** in Schritt (1) ein Alkylaluminium oder Alkylaluminoxan des Weiteren als Co-Katalystor in einer derartigen Menge zugegeben wird, dass das Molverhältnis des Al-Elements zum Ti-Element in der nichthomogenen katalytischen Ziegler-Natta-Komponente: Al/Ti = 0-1.000 beträgt.

4. Verfahren nach Anspruch 1, **dadurch gekennzeichnet, dass** in Schritt (1) ein Alkoxysilan, 2,2,6,6-Tetramethylpiperidin oder aromatischer Ester des Weiteren als externer Elektronendonator in das Reaktionssystem in einer Menge vom 0-100-Fachen des Molgehalts des Ti-Elements in dem Katalysator eingegeben wird, um den Grad der Isotaktizität des Polymers zu regulieren.

5. Verfahren nach Anspruch 4, **dadurch gekennzeichnet, dass** das Alkoxysilan Diphenyldimethoxysilan oder Phenyltriethoxysilan ist; wobei der aromatische Ester Ethylbenzoat oder Methyl-p-Methylbenzoat ist.

6. Verfahren nach Anspruch 1, **dadurch gekennzeichnet, dass** in Schritt (1) der Metallocenkatalysator so reguliert wird, dass es nichtkatalytisch ist, durch Hineingeben einer Verbindung, die durch die Folgende Formel: 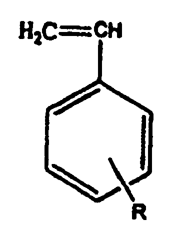 dargestellt ist, wobei R ein Alkyl, das 1-6 Kohlenstoffe aufweist, Ethenyl, Br, Cl oder H oder eine Alkylaluminiumverbindung ist, die 3-9 Kohlenstoffe aufweist, in das Lösungsmittel in einer Menge von 0,1~20 %, auf das Volumen des Lösungsmittels bezogen, um die katalytische Aktivität des Metallocenkatalysators hemmen.

7. Verfahren nach Anspruch 1, **dadurch gekennzeichnet, dass** die Reaktionstemperatur in Schritt (2) 80 °C~120 °C beträgt.

8. Verfahren nach Anspruch 1, **dadurch gekennzeichnet, dass** in Schritt (2) der Metallocenkatalysator im ruhenden Zustand durch Ändern des reagierenden Monomers reaktiviert wird, wobei das reagierende Monomer ein Olefin oder Diolefin ist, das 2-10 Kohlenstoffatome aufweist.

9. Verfahren nach Anspruch 1, **dadurch gekennzeichnet, dass** in Schritt (2) ein Alkylaluminium oder Alkylaluminoxan des Weiteren als Co-Katalystor in einer derartigen Menge zugegeben wird, dass das Molverhältnis des Al-Elements zum metallischen Element in der Metallocenverbindung in dem Verbundstoffkatalysator 0-16.000 beträgt.

10. Verfahren nach Anspruch 9, **dadurch gekennzeichnet, dass** das Alkylaluminium oder Alkylaluminoxan jeweils 1-12 Kohlenstoffatome aufweist.

11. Verfahren nach Anspruch 1, **dadurch gekennzeichnet, dass** der Verbundstoffkatalysator aus der Metallocenverbindung, die durch Alkylaluminium oder Alkylaluminoxan aktiviert wird und dem nichthomogenen Ziegler-Natta-Katalysatorsystem besteht, wobei die katalytische Komponente in der aktivierten Metallocenverbindung 1 Gew.-%~50 Gew.-% des Verbundstoffkatalysators beträgt und das Alkylaluminium oder Alkylaluminoxan 1-12 Kohlenstoffatome aufweist.

12. Verfahren nach Anspruch 11, **dadurch gekennzeichnet, dass** das nichthomogene Ziegler-Natta-Katalysatorsystem ein Katalysator von Kugelform ist, der Magnesiumchlorid als Träger, TiCl₄ oder TiCl₃, und einen internen Elektronendonator enthält,
wobei der interne Elektronendonator Diisobutylphthlat, Dibutylphthalat, Diethylsuccinat oder Fluorendiether oder irgendeine Verbindung, die durch die folgende Formel 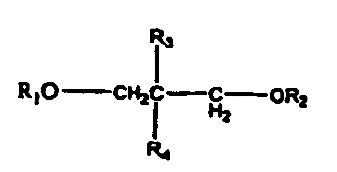 dargestellt ist, ist, wobei R₁ und R₂ Methyl oder Ethyl sind; und R₃ und R₄ eine Alkyl- oder Arylgruppe sind, die 1-8 Kohlenstoffatome aufweist
oder 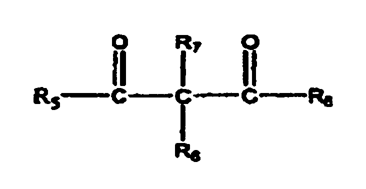 wobei R₅, R₆, R₇ und R₈ eine Alkyl- oder Arylgruppe ist, die 1-8 Kohlenstoffatome aufweist.

13. Verfahren nach Anspruch 11 oder 12, **dadurch gekennzeichnet, dass** die Prozentsätze der Komponenten in dem Ziegler-Natta-Katalysatorsystem Folgendes sind: Mg: 10 %~30 %; Ti 2 %~6 %; Cl: 50 %~70 % und der interne Elektronendonator: 3 %~25 % beträgt.

14. Verfahren nach Anspruch 11, **dadurch gekennzeichnet, dass** in der aktivierten Metallocenverbindung das Molverhältnis des Metallelements in der Metallocenverbindung zum Al-Element in dem Alkylaluminium oder Alkylaluminoxan 1 : 50-1 : 2.000 beträgt.

15. Verfahren nach Anspruch 11 oder 14, **dadurch gekennzeichnet, dass** die Metallocenverbindung eine Verbindung ist, die die folgende allgemeine Formel aufweist:
Rₙ¹R₂₋ₙ²MCl₂
wobei R¹ und R² unabhängig Me₂Si(Ind)₂, Me₂Si(2-Me-4-Ph-Ind)₂, Me₂Si(2-Me-Ind)₂, Me(Me₃Si)Si(2-Me-4-Ph-Ind)₂, Me₂Si(IndR₂)₂, Et-(Ind)₂, Me₂SiCp, MeCp, Cplnd, Cp, Ph₂C(Cp)(Flu), Ph₂C(Cp)(2-Me₂NFlu) oder Ph₂C(Cp (2-MeOFlu) sind, wobei "R" in molekularer Form Me₂Si(IndR₂)₂ ein Alkyl ist, das 1-3 Kohlenstoffatome aufweist, Me CH₃ ist, Ind Indenyl ist, Ph ein Benzolring ist, Et Ethyl ist, Cp Cyclopentadien ist und Flu Fluoren ist;
M Zr, Ti, Hf, V, Cr, Fe oder La ist; und
N = 0-2 ist.

## Revendications

1. Procédé de préparation d'un matériau composite à base de polyoléfines, lequel matériau composite à base de polyoléfines est constitué d'un polymère de propylène et d'un polymère d'éthylène qui est obtenu en copolymérisant l'éthylène avec une alpha-oléfine ou une dioléfine, dans lequel :
la concentration molaire en alpha-oléfine ou en dioléfine dans le polymère d'éthylène est comprise entre 0 % et 60 %, et le polymère d'éthylène représente 3 % à 80 % en masse du matériau composite à base de polyoléfines ;
le matériau composite à base de polyoléfines est sous forme particulaire, et le polymère d'éthylène a une répartition de la masse moléculaire comprise entre 1 et 6 ainsi qu'une température de transition vitreuse comprise entre -80 °C et 0°C; et
le polymère d'éthylène produit lors de la réaction est dispersé de façon homogène dans les particules de polymère de propylène pour former le matériau composite à base de polyoléfines,
**caractérisé en ce que** le procédé comprend les étapes suivantes :
(1) ajout de propylène dans un réacteur et exécution directe d'une polymérisation en masse et/ou polymérisation en suspension dans un solvant à base d'alcane et/ou d'hydrocarbures aromatiques, en présence d'un catalyseur composite constitué d'un composant catalytique Ziegler-Natta non homogène et d'un composant catalytique à base de composés métallocènes, à une température réactionnelle comprise entre 0 °C et 80 °C, dans lequel le composant catalytique à base de composés métallocènes représente entre 1 % et 50 % en masse du catalyseur composite, et au cours de la première étape de polymérisation oléfinique, le catalyseur Ziegler-Natta non homogène est catalytique et le composé métallocène est contrôlé de façon à être non catalytique, pour obtenir des particules de polyoléfine ; et
(2) à la fin de la polymérisation de l'étape (1), arrêt de l'ajout du monomère de propylène pour la polymérisation de l'étape (1), et
soit introduction directe d'un monomère réactionnel dans le polymère de propylène produit dans l'étape (1) pour la polymérisation en suspension ;
soit élimination de la partie liquide du polymère de propylène produit dans l'étape (1), ajout de solvant à base d'alcane et/ou d'hydrocarbures aromatiques et introduction du monomère réactionnel pour la polymérisation en suspension ;
soit élimination de la partie liquide du polymère de propylène produit dans l'étape (1) et introduction directe d'un monomère réactionnel pour la polymérisation en phase gazeuse ;
dans lequel ledit monomère réactionnel est une oléfine ou une dioléfine ayant entre 2 et 10 atomes de carbone ; et
le catalyseur Ziegler-Natta non homogène est contrôlé de façon à être sensiblement non catalytique, et le composé métallocène à l'état dormant est réactivé pour être catalytique lors de l'homopolymérisation ou de la copolymérisation de l'éthylène, pour obtenir le matériau composite à base de polyoléfines.

2. Procédé selon la revendication 1, **caractérisé en ce que** ledit solvant à base d'alcane est un alcane ayant entre 5 et 10 atomes de carbone.

3. Procédé selon la revendication 1, **caractérisé en ce que**, dans l'étape (1), un alkylaluminium ou un alkylaluminoxane est également ajouté sous forme de co-catalyseur, dans une quantité telle que le rapport molaire de l'élément Al à l'élément Ti dans ledit composant catalytique Ziegler-Natta non homogène est compris entre 0 et 1 000.

4. Procédé selon la revendication 1, **caractérisé en ce que**, dans l'étape (1), un alcoxysilane, une 2,2,6,6-tétraméthylpipéridine ou un ester aromatique sous forme de donneur d'électrons externe est également ajouté dans le système réactionnel pour contrôler le degré d'isotacticité du polymère, dans une quantité représentant entre 0 et 100 fois la concentration molaire de l'élément Ti dans le catalyseur.

5. Procédé selon la revendication 4, **caractérisé en ce que** ledit alcoxysilane est du diphényldiméthoxysilane ou du phényltriéthoxysilane ; et ledit ester aromatique est du benzoate d'éthyle ou du p-méthylbenzoate de méthyle.

6. Procédé selon la revendication 1, **caractérisé en ce que**, dans l'étape (1), ledit catalyseur métallocène est contrôlé de façon à être non catalytique en ajoutant un composé représenté par la formule suivante : 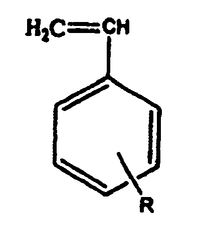 où R est un alkyle ayant entre 1 et 6 atomes de carbone, de l'éthényle, Br, Cl, H ou un composé d'alkylaluminium ayant entre 3 et 9 atomes de carbone pour inhiber l'activité catalytique du catalyseur métallocène dans le solvant, dans une quantité représentant entre 0,1 % et 20 % en volume du solvant.

7. Procédé selon la revendication 1, **caractérisé en ce que** la température réactionnelle dans l'étape (2) est comprise entre 80 °C et 120 °C.

8. Procédé selon la revendication 1, **caractérisé en ce que**, dans l'étape (2), le catalyseur métallocène à l'état dormant est réactivé en remplaçant le monomère réactionnel, dans lequel le monomère réactionnel est une oléfine ou une dioléfine ayant entre 2 et 10 atomes de carbone.

9. Procédé selon la revendication 1, **caractérisé en ce que**, dans l'étape (2), un alkylaluminium ou un alkylaluminoxane est également ajouté sous forme de co-catalyseur, dans une quantité telle que le rapport molaire de l'élément Al à l'élément métallique dans le composé métallocène dans ledit catalyseur composite est compris entre 0 et 16 000.

10. Procédé selon la revendication 9, **caractérisé en ce que** ledit alkylaluminium ou alkylaluminoxane possède chacun entre 1 et 12 atomes de carbone.

11. Procédé selon la revendication 1, **caractérisé en ce que** ledit catalyseur composite est constitué du composé métallocène activé par l'alkylaluminium ou l'alkylaluminoxane et le système catalytique Ziegler-Natta non homogène, dans lequel le composant catalytique dans le composé métallocène activé représente entre 1 % et 50 % en masse du catalyseur composite, et l'alkylaluminium ou l'alkylaluminoxane possède entre 1 et 12 atomes de carbone.

12. Procédé selon la revendication 11, **caractérisé en ce que** ledit système catalytique Ziegler-Natta non homogène est un catalyseur de forme sphérique contenant du chlorure de magnésium sous forme de support, du TiCl₄ ou du TiCl₃, et un donneur d'électrons interne ;
dans lequel le donneur d'électrons interne est le phtalate de diisobutyle, le phtalate de dibutyle, le succinate de diéthyle ou le diéther de fluorène, ou un quelconque composé représenté par la formule suivante : 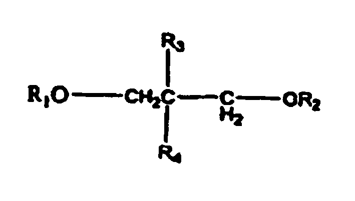 où R₁ et R₂ sont du méthyle ou de l'éthyle ; et R₃ et R₄ sont un groupe alkyle ou un aryle ayant entre 1 et 8 atomes de carbone, ou 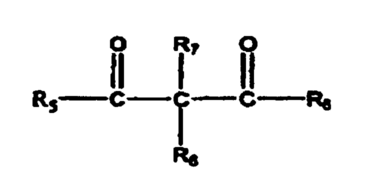 où R₅, R₆, R₇ et R₈ sont un groupe alkyle ou un aryle ayant entre 1 et 8 atomes de carbone.

13. Procédé selon la revendication 11 ou 12, **caractérisé en ce que** les pourcentages des composants dans ledit système catalytique Ziegler-Natta non homogène sont les suivants : entre 10 % et 30 % de Mg, entre 2 % et 6 % de Ti, entre 50 % et 70 % de Cl et entre 3 % et 25 % de donneur d'électrons interne.

14. Procédé selon la revendication 11, **caractérisé en ce que**, dans ledit composé métallocène activé, le rapport molaire de l'élément métallique dans ledit composé métallocène à l'élément Al dans l'alkylaluminium ou l'alkylaluminoxane est compris entre 1:50 et 1:2 000.

15. Procédé selon la revendication 11 ou 14, **caractérisé en ce que** ledit composé métallocène est un composé ayant la formule générale suivante :
Rₙ¹R₂₋ₙ²MCl₂
où R¹ et R² sont, indépendamment l'un de l'autre, Me₂Si(Ind)₂, Me₂Si(2-Me-4-Ph-Ind)₂, Me₂Si(2-Me-Ind)₂, Me(Me₃Si)Si(2-Me-4-Ph-Ind)₂, Me₂Si(IndR₂)₂, Et(Ind)₂, Me₂SiCp, MeCp, CpInd, Cp, Ph₂C(Cp)(Flu), Ph₂C(Cp)(2-Me₂NFlu) ou Ph₂C(Cp)(2-Me0Flu), où "R" dans la formule moléculaire Me₂Si(IndR₂)₂ est un alkyle ayant entre 1 et 3 atomes de carbone, Me est CH₃, Ind est de l'indényle, Ph est un cycle de benzène, Et est de l'éthyle, CP est du cyclopentadiène et Flu et du fluorène ;
M est Zr, Ti, Hf, V, Cr, Fe ou La ; et
n est compris entre 0 et 2.
